# FASCICULE DE BREVET EUROPEEN

(11) **EP 1 121 562 B1**
(45) Date de publication et mention de la délivrance du brevet: **17.04.2002**
(21) Numéro de dépôt: 99970158.4
(22) Date de dépôt: 01.10.1999
(51) Int. Cl.: F24D 13/02

(54) **PORTE CHAUFFANTE**
BEHEIZBARE TÜR
HEATING DOOR

(30) Priorité: 02.10.1998 FR 9812583
(43) Date de publication de la demande: 08.08.2001
(73) Titulaire: Peyronny, Bernard, 84250 Le Thor (FR)
(72) Inventeur: Peyronny, Bernard, 84250 Le Thor (FR)
(74) Mandataire: Roman, Michel
(86) Numéro de dépôt international: FR9902338
(87) Numéro de publication internationale: WO0020802

(56) Documents cités:
- FR-A- 2 367 181
- US-A- 2 988 626
- US-A- 3 799 387
- US-A- 4 163 144
- US-A- 4 713 647
- PATENT ABSTRACTS OF JAPAN vol. 1996, no. 12, 26 décembre 1996 (1996-12-26) & JP 08 200717 A (KADOKAWA TOSHIFUMI), 6 août 1996 (1996-08-06)

## Description

La présente invention a pour objet une porte chauffante.

Elle est destinée au chauffage de base ou d'appoint des locaux de tous types, tels que logements, villas, bureaux, magasins ou autres locaux particuliers ou professionnels.

Pour le chauffage des locaux tels que habitations, bureaux ou locaux professionnels, les installations de chauffage central sont de plus en plus abandonnées au profit d'appareils individuels autonomes, en raison des difficultés rencontrées pour contrôler et optimiser la consommation d'énergie dans les installations importantes.

Les sources d'énergie le plus couramment utilisées sont le fioul, le gaz et l'électricité. Cette dernière présente de nombreux avantages tels que souplesse, propreté, confort, facilité de réglage et de programmation, faible investissement, etc, mais son coût rapporté au kilo-watt-heure est sensiblement plus élevé que pour les deux autres énergies. C'est ce qui a motivé le développement du "chauffage intégré", associant des appareils de chauffage électrique à une isolation thermique des locaux. A ce jour, dans le but d'économiser l'énergie, les constructions neuves doivent obligatoirement comporter une bonne isolation thermique et l'électricité est de plus en plus fréquemment choisie comme source d'énergie.

Le chauffage électrique est le plus souvent assuré au moyen de convecteurs fixés contre les murs de la même manière que les radiateurs à eau ou à vapeur.

Ces appareils, métalliques, sont peu esthétiques et diminuent la surface utilisable des murs des locaux dans lesquels ils sont installés.

Le brevet N° FR 2 721 472 déposé par l'auteur de la présente invention décrit une porte chauffante comportant à sa partie basse un corps de chauffe conforme formé d'une résistance blindée noyée dans un bloc métallique d'alliage léger, deux plaques latérales verticales formant avec des montants formés de profils tubulaires, une enceinte permettant la circulation de l'air. De chaque côté, des éléments creux bas et hauts ouverts vers l'extérieur sont prévus pour permettre respectivement la pénétration de l'air dans l'enceinte et sa sortie.

Le brevet N° US 4 163 144 au nom de Jacques REYNIER, fait état d'une porte chauffante formée de deux panneaux de bois résistants au feu et maintenus séparés par des lattes définissant une série de compartiments verticaux à la base de chacun desquels sont disposés des éléments chauffants électriques, des ouvertures avec déflecteurs étant aménagées en haut et en bas des deux panneaux pour le passage de l'air chauffé.

Ces dispositifs sont d'un coût de fabrication relativement élevé en raison du nombre ou de la technique particulière de leurs corps de chauffe, et la sortie d'air en partie haute permet difficilement d'obtenir une bonne répartition de la température.

Le dispositif selon la présente invention supprime tous ces inconvénients. En effet, il permet de réaliser des appareils de chauffage électrique libérant entièrement les murs, assurant une excellente répartition de la température et d'un prix de fabrication peu élevé.

Il est constitué d'une porte formée de deux panneaux de façade montée sur un cadre de manière à former une enceinte séparée en deux compartiments dans le sens de l'épaisseur par une tôle métallique, le compartiment côté pièce étant équipé d'une nappe haute et d'une nappe basse de fils chauffants montées sur des poulies isolantes disposées aux extrémités de ressorts de compensation de la dilatation et aux parties supérieure et inférieure de la porte.

Sur les dessins schématiques annexés, donnés à titre d'exemple non limitatif d'une des formes de réalisation de l'objet de l'invention:
la figure 1 représente une porte sans panneau vue du côté pièce,
la figure 2 est une coupe verticale suivant les flèches F1 de la figure 1
la figure 3 est une coupe horizontale suivant les flèches F2 de la figure 1
les figures 4 et 5 montrent, à échelle réduite, la face interne des panneaux de façade, respectivement du côté pièce et du côté couloir
et la figure 6 est un agrandissement du détail D de la figure 2.

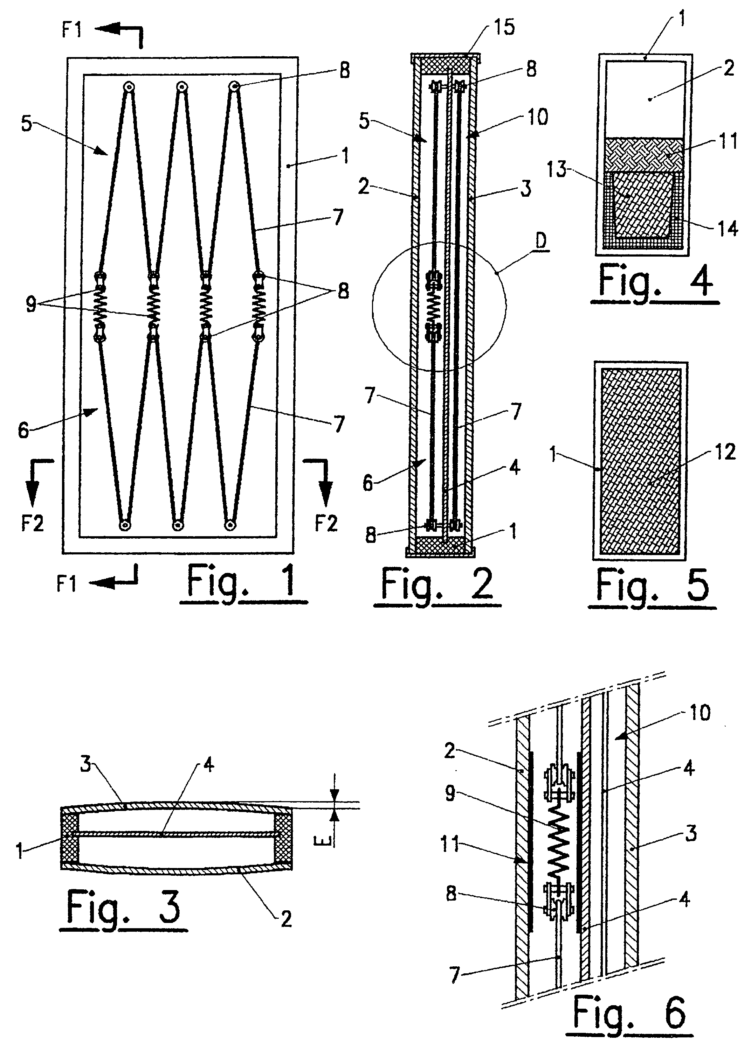

La porte chauffante, figures 1 à 6, est constituée d'un cadre 1 rectangulaire portant deux panneaux de façade en aggloméré de bois ou de matière synthétique, un panneau côté pièce 2 et un panneau côté couloir 3. L'enceinte ainsi constituée est séparée en deux compartiments par une tôle 4 d'acier, parallèle aux panneaux 2, 3 et assurant une température de surface uniforme.

Dans le compartiment situé du côté de la porte donnant sur le local à chauffer préférentiellement, désigné par la suite par "côté pièce", sont disposées, respectivement en partie haute et en partie basse, deux nappes 5, 6 de fil électrique chauffant 7 alimentées en parallèle.

Afin de compenser la dilatation, tout en gardant une tension suffisante pour éviter tout contact avec les parois, les deux fils chauffants 7 sont fixés d'une part sur des poulies isolantes 8 montées près des éléments supérieur et inférieur du cadre 1 et, d'autre part, aux extrémités de ressorts 9 situés à mi-hauteur de la porte, chaque ressort ayant une extrémité accrochée au fil de la nappe supérieure 5 et une extrémité accrochée au fil de la nappe inférieure 6. De préférence les extrémités des ressorts porteront des poulies isolantes 8. La répartition des fils 7 de chaque nappe est symétrique de façon à ce que la dilatation ne provoque pas de déplacement des points supports constitués par les ressorts 9 et les poulies 8. Toutefois, afin d'assurer une bonne répartition des flux thermiques sur la hauteur de la porte, les puissances des deux nappes 5, 6 pourront être rendues différentes en utilisant des fils chauffants 7 ne présentant pas la même résistivité.

Une troisième nappe 10 de fil chauffant 7 peut être mise en oeuvre côté couloir (côté opposé au "côté pièce"). Sa puissance, de l'ordre de 100 à 200 watts, sera sensiblement plus faible que celle des nappes côté pièce (côté pièce + côté couloir : environ 1000 W), ce qui permet de la monter simplement sur des poulies isolantes 8 situées en haut et en bas de la porte sans utiliser de ressorts de compensation de la dilatation.

En variante, pour certaines applications, le compartiment côté pièce peut ne comporter qu'une seule nappe de fil chauffant 7, l'une des extrémités des ressorts 9 étant fixe. Dans ce cas, la puissance totale sera voisine de 850 W).

Les fils chauffants 7, réalisés en alliage métallique enrobé d'une matière synthétique pouvant supporter une température continue supérieure à 200°C, sont disposés de manière à uniformiser les températures de surface de la porte.

Des films isolants 11 souples sont fixées contre la tôle 4 de séparation et le panneau 2 côté pièce, à la hauteur des ressorts 9 et poulies 8 pour les isoler électriquement des parties métalliques.

Afin d'assurer une diffusion optimale de la chaleur, la face interne des panneaux de façade sera revêtue d'écrans thermiques constitués de feuilles d'aluminium collées. L'écran 12 côté couloir recouvrira toute la surface du panneau 3 correspondant, alors que du côté pièce, l'écran thermique 13 ne couvrira que la moitié inférieure du panneau 2.
- On crée un écran thermique 12 côté couloir en collant de l'aluminium sur toute la face intérieure du panneau 3, et un autre écran thermique 13 sur la moitié inférieure de la surface interne du panneau 2 côté pièce.

Dans le même but, des bandes 14 de peinture bleu mat seront disposées le long des bords latéraux et inférieur de la face interne du panneau 2 côté pièce.

Les panneaux de façade 2, 3 seront avantageusement galbés dans le sens vertical pour éviter les risques de déformation dus à la dilatation (écart E entre centre et côtés des panneau de l'ordre de 5 millimètres), et un cadre métallique 15 périphérique pourra être prévu pour améliorer la rigidité de l'ensemble.

Le fonctionnement des nappes 5, 6, 10 de fil chauffant sera contrôlé par un système électronique de type connu répondant aux normes en vigueur.

Le positionnement des divers éléments constitutifs donne à l'objet de l'invention un maximum d'effets utiles qui n'avaient pas été, à ce jour, obtenus par des dispositifs similaires.

## Revendications

1. Porte chauffante, destinée au chauffage de base ou d'appoint des locaux de tous types, tels que logements, villas, bureaux, magasins ou autres locaux particuliers ou professionnels, formée de deux panneaux de façade (2, 3) en aggloméré de bois ou de matière synthétique montés sur un cadre (1),
**caractérisée en ce qu'**elle est agencée de manière à former une enceinte séparée en deux compartiments dans le sens de l'épaisseur par une tôle métallique (4), le compartiment situé du côté de la porte donnant sur le local à chauffer étant équipé d'au moins une nappe (5, 6) de fil chauffant (7) fixée d'une part sur des poulies isolantes (8) montées près des éléments supérieur et inférieur du cadre 1 et, d'autre part, à l'une des extrémités de ressorts (9) de compensation de la dilatation.

2. Porte chauffante selon la revendication 1, se caractérisant par le fait que les extrémités des ressorts (9) sur lesquelles passent le fil chauffant (7) comportent des poulies isolantes (8).

3. Porte chauffante selon l'une quelconque des revendications précédentes, se caractérisant par le fait que le compartiment situé du côté de la porte donnant sur le local à chauffer est équipé d'une nappe haute (5) et d'une nappe basse (6) de fils chauffants (7) alimentées en parallèle et montées d'une part sur des poulies isolantes (8) fixées près des éléments supérieur et inférieur du cadre (1) et, d'autre part, aux extrémités de ressorts (9) de compensation de la dilatation situés à mi-hauteur de la porte.

4. Porte chauffante selon l'une quelconque des revendications précédentes, se caractérisant par le fait que le compartiment côté opposé au local à chauffer comporte une nappe (10) de fil chauffant (7) montée sur des poulies isolantes (8) situées en haut et en bas de la porte dont la puissance est déterminée pour ne pas avoir à utiliser de ressorts de compensation de la dilatation.

5. Porte chauffante selon la revendication 4, se caractérisant par le fait que la-puissance de la nappe (10) de fil chauffant est comprise entre 100 et 200 watts.

6. Porte chauffante selon les revendications 1 et 4, se caractérisant par le fait qu'elle comporte une nappe de fil chauffant (7) côté local à chauffer et une nappe côté opposé, la puissance totale des deux nappes étant voisine de 850 watts.

7. Porte chauffante selon les revendications 3 et 4, se caractérisant par le fait qu'elle comporte deux nappes de fil chauffant (7) côté local à chauffer et une nappe côté opposé, la puissance totale de l'ensemble étant voisine de 1000 watts.

8. Porte chauffante selon l'une quelconque des revendications précédentes, se caractérisant par le fait que les panneaux de façade (2, 3) sont galbés dans le sens vertical pour éviter les risques de déformation dus à la dilatation.

9. Porte chauffante selon l'une quelconque des revendications précédentes, se caractérisant par le fait qu'elle comporte un cadre métallique (15) périphérique destiné à améliorer sa rigidité.

10. Porte chauffante selon l'une quelconque des revendications précédentes, se caractérisant par le fait que le panneau de façade (3) côté opposé au local à chauffer comporte un écran thermique (12) formé d'une feuille d'aluminium collée sur la totalité de sa surface interne.

11. Porte chauffante selon l'une quelconque des revendications précédentes, se caractérisant par le fait que le panneau de façade (2) côté local à chauffer comporte un écran thermique (13) formé d'une feuille d'aluminium collée sur la moitié inférieure de sa surface interne.

12. Porte chauffante selon l'une quelconque des revendications précédentes, se caractérisant par le fait que les fils chauffants (7) sont réalisés en alliage métallique enrobé d'une matière synthétique pouvant supporter une température continue supérieure à 200 °C, et disposés de manière à uniformiser les températures de surface de la porte.

## Claims

1. Heating door, for the main or auxiliary heating of buildings of all types, such as dwellings, villas, offices, stores or other private or professional premises, made of two facing panels (2, 3) in synthetic material or wood chipboard assembled on a frame (1),
**characterized in that** it is arranged so as to form an enclosure separated into two compartments in the direction of the thickness by a metal sheet (4), the compartment located on the side of the door opening onto the room to be heated, equipped with at least one layer (5, 6) of heating wire (7) secured on the one hand to insulating pulleys (8) fitted close to the upper and lower elements of frame 1 and, on the other hand, to one end of the expansion compensation springs (9).

2. Heating door according to claim 1, **characterized in that** the ends of the springs (9) on which pass the heating wire (7) include insulating pulleys (8).

3. Heating door according to any of the preceding claims, **characterized in that** the compartment located on the side of the door giving onto the room to be heated is equipped with an upper and lower layer (5, 6) of heating wires (7) supplied in parallel and fitted, on the one hand, on insulating pulleys (8) fixed close to the upper and lower elements of the frame (1) and, on the other, to the ends of expansion compensation springs (9) located at door mid-height.

4. Heating door according to any of the preceding claims, **characterized in that** the compartment on the outer side to the room to be heated comprises a layer (10) of heating wire (7) fitted on insulating pulleys (8) located at the top and the bottom of the door, the power of which is determined to avoid using the expansion compensation springs.

5. Heating door according to claim 4, **characterized in that** the power of the layer (10) of heating wire is between 100 and 200 Watts.

6. Heating door according to claims 1 and 4, **characterized in that** it comprises a layer of heating wire (7) on the side of the room to be heated and a layer on the opposing side, the total power of the two layers being close to 850 Watts.

7. Heating door according to claims 3 and 4, **characterized in that** it comprises two layers of heating wire (7) on the side of the room to be heated and a layer on the opposing side, the total power being close to 1000 Watts.

8. Heating door according to any of the preceding claims, **characterized in that** the outer panels (2, 3) are curved in the vertical direction to avoid the risks of deformation due to expansion.

9. Heating door according to any of the preceding claims, **characterized in that** it comprises a metal peripheral frame (15) to improve its rigidity.

10. Heating door according to any of the aforesaid claims, **characterized in that** the facing panel (3) on the outer side to the room to be heated is equipped with a heat screen (12) formed of an aluminium sheet stuck over the entire internal surface.

11. Heating door according to any of the preceding claims, **characterized in that** the facing panel (2) on the side of the room to be heated includes a heat screen (13) formed of an aluminium sheet stuck on the lower half of its internal surface.

12. Heating door according to any of the preceding claims, **characterized in that** the heating wires (7) are made out of metal alloy coated with a synthetic material able to tolerate a continuous temperature above 200°C, and arranged so as to make the surface temperatures of the door uniform.

## Patentansprüche

1. Heiztür, bestimmt als Haupt- oder Zusatzheizung von Räumen aller Art, wie Wohnungen, Einfamilienhäusern, Büros, Gewerberäumen oder sonstigen privaten oder betrieblichen Räumlichkeiten, bestehend aus zwei Deckplatten (2, 3) aus Spanplatte oder Kunststoff, die auf einem Rahmen (1) montiert sind, **gekennzeichnet dadurch, dass** sie aus einer Kammer besteht, die in der Dickenrichtung durch ein Metallblech (4) in zwei Abteile geteilt wird, von denen das auf der Seite des zu heizenden Raumes liegende mit mindestens einer Matte (5, 6) aus Heizdrähten (7) versehen ist, die einerseits auf isolierenden, in der Nähe der oberen und unteren Elemente des Rahmens (1) installierten Rollen (8) und andererseits an einem Ende der Dehnungsausgleichsfeder (9) befestigt ist.

2. Heiztür gemäß Anspruch 1, **gekennzeichnet dadurch, dass** die Enden der Feder (9), über welche die Heizdrähte (7) laufen, isolierende Rollen (8) aufweisen.

3. Heiztür nach einem der vorstehenden Ansprüche, **gekennzeichnet dadurch, dass** das dem zu heizenden Raum zugewandte Abteil der Tür mit je einer oberen (5) und unteren (6) Matte aus Heizdrähten (7) versehen ist, die parallel geschaltet sind und einerseits auf den isolierenden Rollen (8) in der Nähe der oberen und unteren Elemente des Rahmens (1) und andererseits an den Enden der Dehnungsausgleichsfeder (9) in mittlerer Türhöhe montiert sind.

4. Heiztür nach einem der vorstehenden Ansprüche, **gekennzeichnet dadurch, dass** das dem zu heizenden Raum abgewandte Abteil eine Matte (10) aus Heizdrähten (7) aufweist, die auf isolierenden Rollen (8) im oberen und unteren Teil der Tür montiert sind und deren Leistung so festgelegt ist, dass die Dehnungsausgleichsfedern nicht benutzt werden müssen.

5. Heiztür nach Anspruch 4, **gekennzeichnet dadurch, dass** die Heizmatte (10) eine Leistung zwischen 100 und 200 Watt besitzt.

6. Heiztür nach Anspruch 1 und 4, **gekennzeichnet dadurch, dass** sie eine Heizmatte (7) auf der Seite des zu heizenden Raumes und eine Matte auf der gegenüberliegenden Seite aufweist, wobei die Gesamtleistung beider Matten etwa 850 Watt beträgt.

7. Heiztür nach Anspruch 3 und 4, **gekennzeichnet dadurch, dass** sie zwei Heizmatten (7) auf der dem zu heizenden Raum zugewandten Seite und eine Matte auf der diesem abgewandten Seite besitzt, wobei die Leistung der gesamten Einheit etwa 1000 Watt beträgt.

8. Heiztür nach einem der vorstehenden Ansprüche, **gekennzeichnet dadurch, dass** die Deckplatten (2, 3) in senkrechter Richtung gewölbt sind, um eine Verformung aufgrund der Ausdehnung auszuschließen.

9. Heiztür nach einem der vorstehenden Ansprüche, **gekennzeichnet dadurch, dass** sie von einem Metallrahmen (15) umgeben ist, um die Steifigkeit zu verbessern.

10. Heiztür nach einem der vorstehenden Ansprüche, **gekennzeichnet dadurch, dass** die Deckplatte (3) auf der dem zu heizenden Raum abgewandten Seite einen Wärmeschild (12) bestehend aus einer über die gesamte innere Oberfläche geklebten Aluminiumfolie besitzt.

11. Heiztür nach einem der vorstehenden Ansprüche, **gekennzeichnet dadurch, dass** die Deckplatte (2) auf der dem zu heizenden Raum zugewandten Seite einen Wärmeschild (13) in Form einer Aluminiumfolie besitzt, die auf die untere Hälfte ihrer inneren Oberfläche geklebt ist.

12. Heiztür nach einem der obenstehenden Ansprüche, **gekennzeichnet dadurch, dass** die Heizdrähte (7) aus einer Metalllegierung sind und von einem Kunststoff umgeben, der eine Dauertemperatur von über 200 °C ertragen kann, wobei die Drähte so angeordnet sind, dass die Temperatur auf der gesamten Türoberfläche einheitlich ist.
